# EUROPEAN PATENT APPLICATION

(11) **EP 2 169 922 A1**
(43) Date of publication of application: **31.03.2010**
(21) Application number: 08764023.1
(22) Date of filing: 05.06.2008
(51) Int. Cl.: H04M 1/02, G02F 1/1333, G06F 1/16

(54) **FOLDABLE PORTABLE TERMINAL**

(30) Priority: 04.07.2007 JP 2007175855
(71) Applicant: Sharp Kabushiki Kaisha, Osaka-shi, Osaka 545-8522 (JP)
(72) Inventor: WADA, Kouhel, Osaka 545-8522 (JP); IMAI, Kimiaki, Osaka 545-8522 (JP)
(74) Representative: Müller - Hoffmann & Partner
(86) International application number: PCT/JP2008/001426
(87) International publication number: WO 2009/004758

(57) **Abstract**

In a foldable portable terminal, a display device 6 is contained in a first housing 2. The display device 6 includes a display panel 4 that is longer in a lateral direction, and a driver 5 for driving the display panel 4. A pair of first hinge bearing portions 2a are respectively formed at lower right and left ends of the first housing 2 so as to protrude beyond the front surface of the first housing 2 with respect to the display panel 4. An operation section 8 is contained in a second housing 3, and a pair of second hinge bearing portions 3a are formed at an upper end of the second housing 3 so as to protrude horizontally between the first hinge bearing portions 3a. An open/close shaft is disposed in each of right and left pairs of the first hinge bearing portion 2a and the second hinge bearing portion 3a which are rotatably coupled with each other, in order to foldably connect the first housing 2 and the second housing 3 to each other. Thus, the lateral centerline Y of the display panel 4 is aligned with the lateral centerline of the first housing 2 while minimizing an increase in size of the first housing 2 due to the alignment.

## Description

### TECHNICAL FIELD

The present invention relates to foldable portable terminals in which a first housing and a second housing are foldably connected to each other. More particularly, the present invention relates to placement of a display device therein.

### BACKGROUND ART

Foldable portable terminals including a first housing containing a display device, a second housing containing an operation section, and an open/close shaft are conventionally known in the art. The display device includes a rectangular plate-shaped display panel, and a driver for driving the display panel. The open/close shaft foldably connects the first and second housings to each other.

Liquid crystal display (LCD) devices typically include: a liquid crystal panel for displaying an image; a driver substrate having driver integrated circuit (IC) chips disposed around the liquid crystal panel; a lighting device; and a frame enclosing these components.

For example, Patent Document 1 describes an LCD device using a light guide plate type backlight unit. In this LCD device, a lamp unit and a backlight unit are held in a liquid crystal holder so that the lamp unit is positioned on a side surface of the backlight unit. Horizontal driver IC chips are disposed in one of upper and lower edge portions of the liquid crystal panel, and vertical driver IC chips are disposed on one of left and right edge portions of the liquid crystal panel. Since the IC chips are attached at a position opposite to that of the lamp unit so as to face the lamp unit, the display brightness is increased, and the overall thickness and size of the LCD device are reduced.

An LCD device of Patent Document 2 has an LCD module, an LCD driver, a light guide for backlighting, a light source for backlighting, and a reflective/light-shielding layer. The LCD driver is disposed on one edge portion of the upper surface of the LCD module. The backlight light guide member is disposed so as to face the lower surface of the LCD module. The backlight light source is disposed at an end on the edge portion side of the backlight light guide member. The reflective/light-shielding layer, which has a light shielding upper surface and a reflective lower surface, is disposed on the edge portion of the lower surface of the LCD module. This reduces the number of layers to be formed, and improves the brightness.

### CITATION LIST

### PATENT DOCUMENT

PATENT DOCUMENT 1: Japanese Published Patent Application No. H06-194652
PATENT DOCUMENT 2: Japanese Published Patent Application No. 2001-272691

### SUMMARY OF THE INVENTION

### TECHNICAL PROBLEM

However, in Patent Documents 1 and 2, a substrate extends near one or two sides of a rectangular plate-shaped display panel, and an LCD driver is disposed thereon. Thus, the lateral centerline of the display panel is not aligned with the lateral centerline of a first housing.

If the size of a display section is increased, and the size of the outer shape of the product is reduced in a foldable portable terminal containing such an LCD, the lateral centerline of the display panel is not aligned with the lateral centerline of the overall outer shape of the foldable portable terminal, and aligning these lateral centerlines with each other requires an increase in size of the overall outer shape of the foldable portable terminal.

The present invention was developed in view of the above problem, and it is an object of the present invention to align the respective lateral centerlines of a display panel and a first housing with each other while minimizing an increase in size of the first housing due to the alignment.

### SOLUTION TO THE PROBLEM

In order to achieve the above object, according to the present invention, a first housing containing a display device is positioned behind a second housing in an open state of a foldable portable terminal when viewed from the front side of the foldable portable terminal.

Specifically, in a first invention, a foldable portable terminal includes: a first housing containing a display device, and having a pair of first hinge bearing portions, where the display device includes a display panel that is longer in a lateral direction, and a driver for driving the display panel, and the pair of first hinge bearing portions are respectively formed at lower right and left ends of the first housing so as to protrude beyond a front surface of the first housing with respect to the display panel; a second housing containing an operation section, and having a pair of second hinge bearing portions, which are respectively formed at upper right and left ends of the second housing so as to protrude horizontally between the first hinge bearing portions; and a pair of open/close shafts for foldably connecting the first housing and the second housing to each other, where each of the open/close shafts is disposed in a corresponding one of pairs of the first hinge bearing portion and the second hinge bearing portion.

With the above configuration, a part of the display device other than the display panel for displaying an image, e.g., the driver, can be positioned behind the second hinge bearing portions when viewed from a front surface of the first housing. This facilitates alignment between the respective lateral centerlines of the display panel and the first housing while suppressing an increase in size of the first housing.

According to a second invention, in the first invention, the display panel is positioned between the second hinge bearing portions so as not to overlap the second hinge bearing portions when viewed from a front surface of the first housing.

With the above configuration, since the display panel is positioned between the pair of second hinge bearing portions, the lateral centerline of the display panel can be aligned with the lateral centerline of the first housing, and the size of the display screen can be increased.

According to a third invention, in the second invention, the driver is positioned on at least one of left and right sides of the display panel, and the driver is vertically aligned with the second hinge bearing portions when viewed from the front surface of the first housing.

With the above configuration, the driver can be vertically aligned with portions where the second hinge bearing portions are present. Thus, the visibility of an image is not reduced even if the display panel extends down to a position near the lower end of the first housing so as to have a larger size.

According to a fourth invention, in any one of the first through third inventions, a lateral centerline of the display panel is substantially aligned with a lateral centerline of the first housing.

With the above configuration, the display panel is easy to see, and has a good appearance.

According to a fifth invention, in any one of the first through fourth inventions, input keys are arranged in the operation section in a pattern that is longer in the lateral direction.

With the above configuration, the operation section can have the same key arrangement as that of personal computers. This allows the user to comfortably operate the foldable portable terminal like the personal computers while looking at the screen that is longer in the lateral direction.

According to a sixth invention, in any of the first through fifth inventions, the display panel is a liquid crystal display panel.

With the above configuration, liquid crystal displays are less expensive and has a longer life, as compared to organic electroluminescence (EL) displays.

According to a seventh invention, in any one of the first through fifth inventions, the display panel is an organic EL display panel.

With the above configuration, organic EL displays have low power consumption due to self light emission, and have a wider viewing angle as compared to liquid crystal displays. Moreover, the organic EL displays require no backlight, whereby the thickness of the display panel can be reduced.

According to an eighth invention, in any one of the first through seventh inventions, the foldable portable terminal is a mobile phone.

With the above configuration, the user can operate the foldable portable terminal via the operation section while looking at the laterally balanced display panel that is longer in the lateral direction.

### ADVANTAGES OF THE INVENTION

As described above, the first housing containing the display device is positioned behind the second housing in the open state of the foldable portable terminal when viewed from the front side of the foldable portable terminal. Thus, a portion of the display device other than the display panel can be positioned behind the second hinge bearing portions. This enables the respective lateral centerlines of the display panel and the first housing to be substantially aligned with each other, and enables the size of the display panel to be increased as much as possible.

### BRIEF DESCRIPTION OF THE DRAWINGS

[FIG. 1] FIG. 1 is a perspective view showing an open state of a foldable mobile phone according to an embodiment of the present invention.
[FIG. 2] FIG. 2 is a perspective view showing a folded state of the mobile phone.
[FIG. 3] FIG. 3 is a back view of the mobile phone.
[FIG. 4] FIG. 4 is a front view showing placement of a display device in the mobile phone.
[FIG. 5] FIG. 5 is a side view of the mobile phone.
[FIG. 6] FIG. 6 is a cross section taken along line VI-VI in FIG. 4.
[FIG. 7] FIG. 7 shows the configuration of the display device, where FIG. 7(a) is a front view, and FIG. 7(b) is a side view.

### DESCRIPTION OF REFERENCE CHARACTERS

- 1: Mobile Phone (Foldable Portable Terminal)
- 2: First Housing
- 2a: First Hinge Bearing Portion
- 3: Second Housing
- 3a: Second Hinge Bearing Portion
- 4: Display Panel
- 5: Driver
- 6: Display Device
- 8: Operation Section
- 8a: Input Key
- 9: Left Open/Close Shaft
- 10: Right Open/Close Shaft

### DESCRIPTION OF EMBODIMENTS

An embodiment of the present invention will be described below with reference to the accompanying drawings.

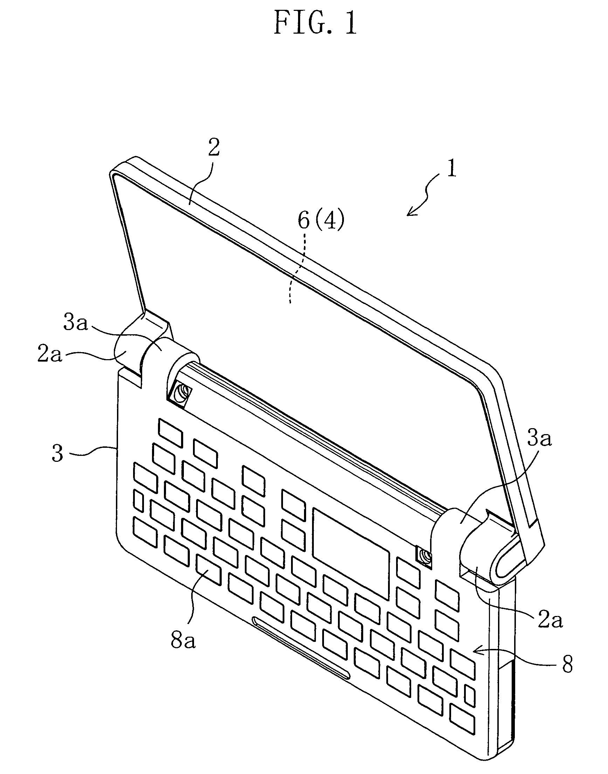

FIGS. 1 through 6 show a foldable mobile phone 1 as a foldable portable terminal of an embodiment of the present invention. In the mobile phone 1, a first housing 2 and a second housing 3 are foldably connected to each other. The first housing 2 and the second housing 3 are, e.g., resin molded parts.

A pair of first hinge bearing portions 2a are respectively formed at the lower right and left ends of the first housing 2 so as to protrude beyond the front surface of the first housing 2 with respect to a display panel 4.

The second housing 3 contains an operation section 8 where input keys 8a are arranged in a pattern that is longer in the lateral direction. The operation section 8 can have the same key arrangement as that of personal computers (PCs). This allows the user to comfortably operate the mobile phone 1 like the PCs while looking at the screen that is longer in the lateral direction. A pair of second hinge bearing portions 3a are integrally formed at the upper end of the second housing 3 so as to be spaced apart from each other in the lateral direction. The second hinge bearing portions 3a protrude horizontally between the first hinge bearing portions 2a,

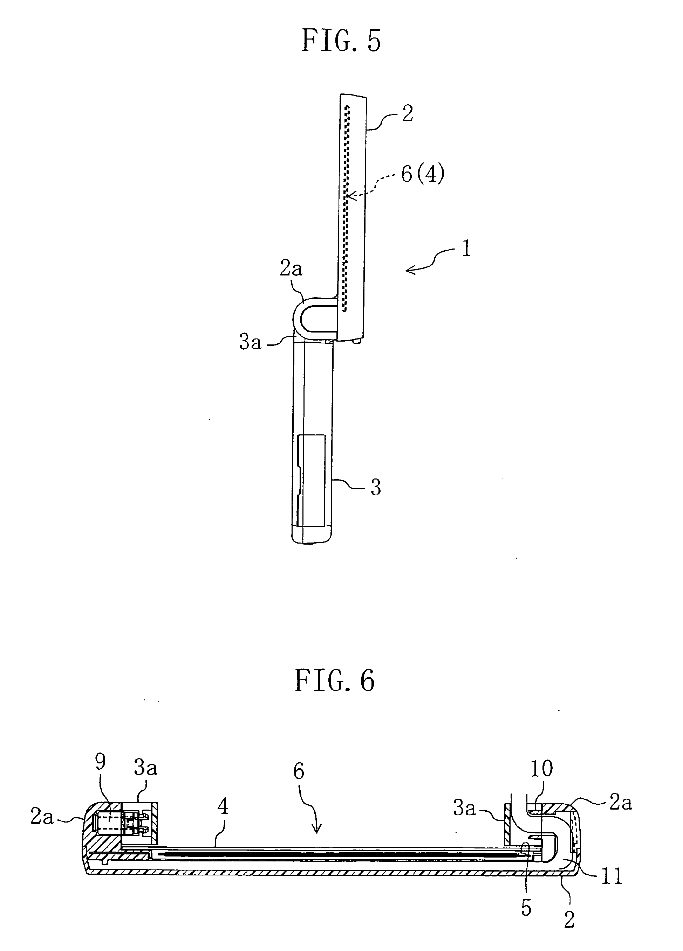

As shown in FIG. 6, the first hinge bearing portions 2a and the second hinge bearing portions 3a are hollow members. For example, a left open/close shaft 9 for foldably connecting the first housing 2 and the second housing 3 to each other is contained in the left first hinge bearing portion 2a and the left second hinge bearing portion 3a. The left open/close shaft 9 has an elastic member (not shown) for retaining the first housing 2 at a predetermined position, and assisting in opening and closing the first housing 2. The right first hinge bearing portion 2a is provided with a hollow right open/close shaft 10, which protrudes toward the second hinge bearing portions 3a. Signal lines 11 for electrically connecting a display device 6 and the operation section 8 extend in the right open/close shaft 10, the right first hinge bearing portion 2a, and the second hinge bearing portion 3 a.

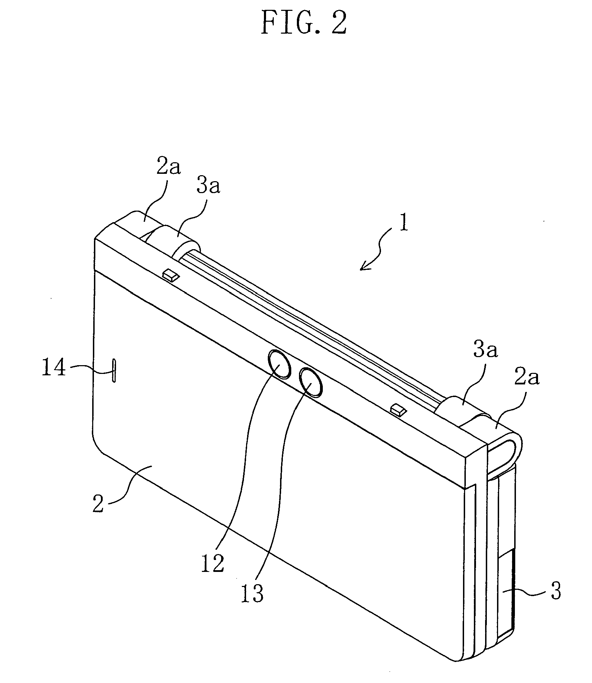

As shown in FIG. 2, a call button 12 and an end call button 13 are disposed in the middle on the first hinge bearing portion 2a side of the back surface of the first housing 2. A receiver 14 is disposed on the left side of the back surface of the first housing 2. A microphone is provided on the lower side surface, not shown, of the first housing 2. This enables the user to make and answer a call and to end a call both in the folded state.

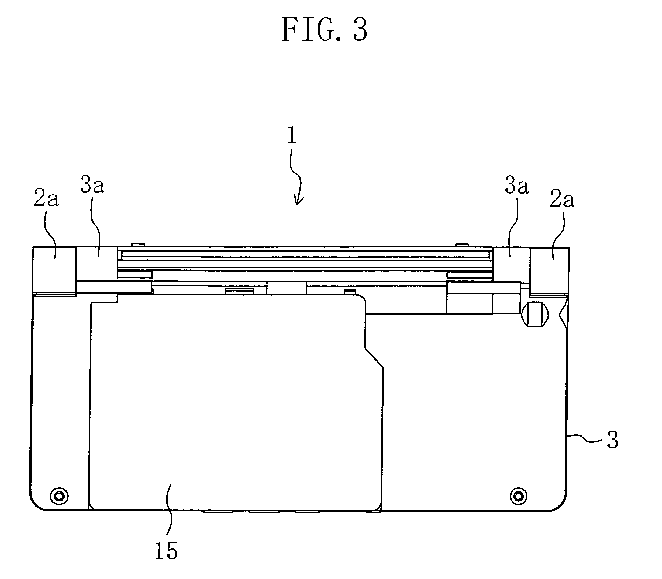

As shown in FIG. 3, a battery accommodating portion (not shown) is formed on the back side of the second housing 3, and the surface of the battery accommodating portion is covered by a battery cover 15.

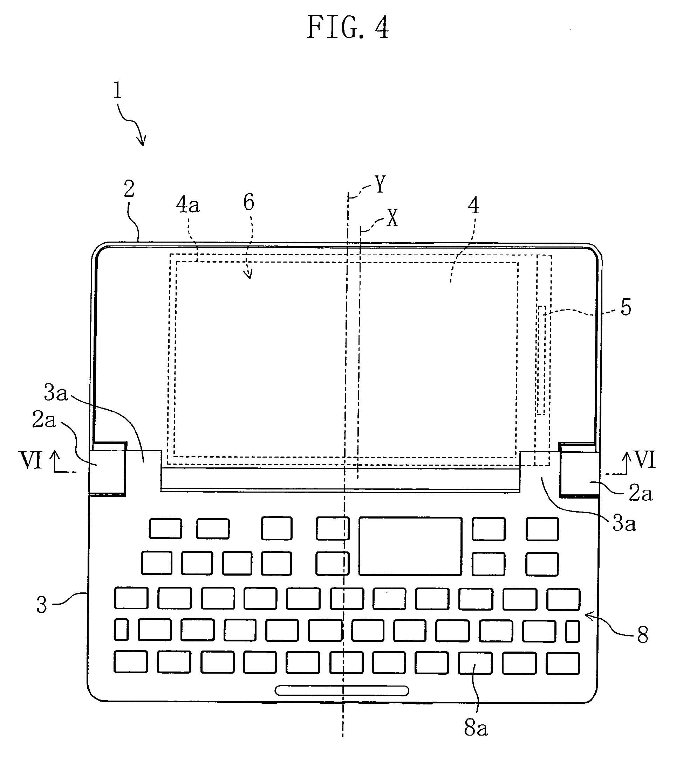

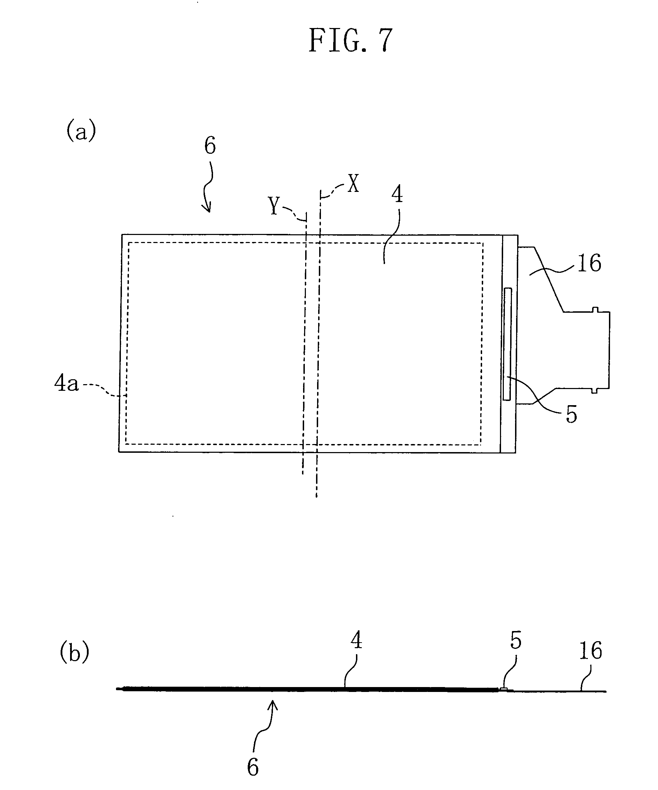

As shown in FIGS. 4 and 7, the first housing 2 contains the display device 6, and the display device 6 includes the display panel 4 that is longer in the lateral direction (the left-right direction in the figures), and a driver 5 for driving the display panel 4. A flexible substrate 16 is connected to the right side of the rectangular plate-shaped display panel 4. The display panel 4 is implemented by a liquid crystal display that is inexpensive and has a long life. In the display panel 4, a liquid crystal layer is interposed between a pair of glass substrates, and a region defined by broken line in FIG. 7 is a display area 4a. The driver 5 is disposed on the flexible substrate 16, and the signal lines 11 are connected to the flexible substrate 16. Thus, the lateral centerline Y of the display panel 4 (the display area 4a) is offset to the left from the lateral centerline X of the entire display device 6.

On the other hand, as shown in FIG. 4, the lateral centerline X of the display device 6 is offset to the right from the lateral centerline of the first housing 2 (the second housing 3). Thus, the lateral centerline Y of the display area 4a is substantially aligned with the lateral centerline of the first housing 2. That is, the display area 4a extends between the pair of second hinge bearing portions 3a so as not to overlap the pair of second hinge bearing portions 3a, and so that the lower end of the display area 4a is located near the lower end of the first housing 2. The driver 5 is vertically aligned with the right second hinge bearing portion 3a when viewed from the front surface of the first housing 2. Thus, a part of the display device 6 other than the display panel 4, e.g., the driver 5, can be positioned behind the second hinge bearing portions 3a when viewed from the front surface of the first housing 2. This facilitates alignment between the lateral centerline Y of the display area 4a and the lateral centerline of the first housing 2. Thus, since the lateral centerline Y of the display area 4a can be aligned with the lateral centerline of the first housing 2 while increasing the size of the display area 4a, the display panel 4 becomes easy to see, and has a good appearance.

Thus, according to the mobile phone 1 of the present embodiment, the first housing 2 containing the display device 6 is positioned behind the second housing 3 in the open state of the mobile phone 1 when viewed from the front side of the mobile phone 1. Thus, a part of the display device 6 other than the display panel 4 can be positioned behind the second hinge bearing portions 3a. This enables the lateral centerline Y of the display area 4a to be substantially aligned with the lateral centerline of the first housing 2, and enables the size of the display panel 4 to be increased as much as possible.

### (Other Embodiments)

The above embodiment of the present invention may be configured as follows.

That is, although the foldable portable terminal is a mobile phone in the above embodiment, the foldable portable terminal may be a personal handyphone system (PHS), a personal digital assistant (PDA), a personal computer (PC), a mobile tool, an electronic dictionary, an electronic calculator, a copier, or the like.

Although the display panel 4 is implemented by a liquid crystal display in the above embodiment, the display panel 4 may be implemented by an organic electroluminescence (EL) display. Organic EL displays have low power consumption due to self light emission, and have a wider viewing angle as compared to liquid crystal displays. Moreover, the organic EL displays require no backlight, whereby the thickness of the display panel 4 can be reduced.

Although the driver 5 is positioned on the right side of the display panel 4 in the above embodiment, the driver 5 may be positioned on the left side of the display panel 4. In this case as well, the lateral centerline X of the display device 6 is offset to the left, but the lateral centerline Y of the display panel 4 can be aligned with the lateral centerline of the first housing 2.

Note that the above embodiments are essentially preferable examples, and are not intended to limit the scope of the present invention, its applications, and its uses.

### INDUSTRIAL APPLICABILITY

As described above, the present invention is useful for foldable portable terminals having a display panel that is longer in the lateral direction, such as mobile phones, PHSs, PDAs, PCs, mobile tools, electronic dictionaries, electronic calculators, and copiers.

## Claims

1. A foldable portable terminal, comprising:
a first housing containing a display device, and having a pair of first hinge bearing portions, where the display device includes a display panel that is longer in a lateral direction, and a driver for driving the display panel, and the pair of first hinge bearing portions are respectively formed at lower right and left ends of the first housing so as to protrude beyond a front surface of the first housing with respect to the display panel;
a second housing containing an operation section, and having a pair of second hinge bearing portions, which are respectively formed at upper right and left ends of the second housing so as to protrude horizontally between the first hinge bearing portions; and
a pair of open/close shafts for foldably connecting the first housing and the second housing to each other, where each of the open/close shafts is disposed in a corresponding one of right and left pairs of the first hinge bearing portion and the second hinge bearing portion which are rotatably coupled with each other.

2. The foldable portable terminal of claim 1, wherein
the display panel is positioned between the second hinge bearing portions so as not to overlap the second hinge bearing portions when viewed from a front surface of the first housing.

3. The foldable portable terminal of claim 2, wherein
the driver is positioned on at least one of left and right sides of the display panel, and the driver is vertically aligned with the second hinge bearing portions when viewed from the front surface of the first housing.

4. The foldable portable terminal of claim 1, wherein
a lateral centerline of the display panel is substantially aligned with a lateral centerline of the first housing.

5. The foldable portable terminal of claim 1, wherein
input keys are arranged in the operation section in a pattern that is longer in the lateral direction.

6. The foldable portable terminal of claim 1, wherein
the display panel is a liquid crystal display panel.

7. The foldable portable terminal of claim 1, wherein
the display panel is an organic EL display panel.

8. The foldable portable terminal of claim 1, wherein
the foldable portable terminal is a mobile phone.
